# EUROPEAN PATENT APPLICATION

(11) **EP 4 546 870 A1**
(43) Date of publication of application: **30.04.2025**
(21) Application number: 23206388.3
(22) Date of filing: 27.10.2023
(51) Int. Cl.: H04W 36/32, H04W 64/00, H04W 88/16

(54) **TRANSFER OF A MOBILE NODE FROM A FIRST TO A SECOND LOCALIZATION SYSTEM BASED ON DETERMINED SPATIAL MOVEMENT**

(71) Applicant: NXP B.V., 5656 AG Eindhoven (NL)
(72) Inventor: Ridolfi, Matteo, 5656 AG Eindhoven (NL); Brink, Klaas, 5656 AG Eindhoven (NL)
(74) Representative: Krott, Michel

(57) **Abstract**

In accordance with a first aspect of the present disclosure, a method of operating a gateway device is conceived, comprising: detecting, by a detection unit included in the gateway device, that an external mobile node is within a predefined distance from the gateway device; determining, by a movement determination unit included in the gateway device, a spatial movement of the mobile node; performing, by a localization handover unit included in the gateway device, a logical handover of the mobile node from a first localization system to a second localization system in dependence on the determined spatial movement. In accordance with further aspects of the present disclosure, a computer program for carrying out said method is provided, as well as a corresponding gateway device.

## Description

### TECHNICAL FIELD

The present disclosure relates to a method of operating a gateway device. Furthermore, the present disclosure relates to a computer program for carrying out said method. In addition, the present disclosure relates to a corresponding gateway device.

### BACKGROUND

Localization systems are typically configured to aid a mobile node to determine its position within a predefined area. For example, satellite-based localization systems typically contain a plurality of satellites, which transmit signals to the mobile node, so that the latter can determine its position. Similarly, indoor localization systems may deploy different communication technologies in order to support a mobile node to determine its position. For example, ultra-wideband (UWB) communication may be used for this purpose. In that case, ranging operations may be performed between one or more UWB nodes and the mobile node.

### SUMMARY

In accordance with a first aspect of the present disclosure, a method of operating a gateway device is conceived, comprising: detecting, by a detection unit included in the gateway device, that an external mobile node is within a predefined distance from the gateway device; determining, by a movement determination unit included in the gateway device, a spatial movement of the mobile node; performing, by a localization handover unit included in the gateway device, a logical handover of the mobile node from a first localization system to a second localization system in dependence on the determined spatial movement.

In one or more embodiments, the handover is performed if the determined spatial movement indicates that the mobile node physically approaches the gateway device.

In one or more embodiments, the detection unit further detects a direction of UWB signals transmitted by the mobile node, and wherein the localization handover unit performs said logical handover in dependence on the determined spatial movement and said direction of UWB signals transmitted by the mobile node.

In one or more embodiments, the gateway device forms part of the second localization system.

In one or more embodiments, the first localization system is a satellite-based localization system and the second localization system is a localization system based on ultra-wideband (UWB) communication.

In one or more embodiments, the detection unit detects whether the mobile node is within said predefined distance by causing one or more UWB nodes of the second localization system to perform an object detection operation, and wherein the movement determination unit determines the spatial movement by causing the UWB nodes to perform ranging operations with the mobile node.

In one or more embodiments, performing the logical handover comprises transmitting first data from the localization handover unit to a localization unit comprised in the second localization system, wherein said first data at least includes a current position of the mobile node and a direction of movement.

In one or more embodiments, performing the logical handover comprises transmitting second data from the localization handover unit to the mobile node, wherein said second data at least includes a map of a predefined area covered by the second localization system.

In one or more embodiments, the detection unit detects the mobile node by periodically broadcasting discovery beacons and receiving a response to at least one of said beacons, or by receiving one or more beacons transmitted by the mobile node.

In one or more embodiments, the detection unit further negotiates communication parameters with the mobile node, said parameters being usable by the movement determination unit and the localization handover unit for communication with the mobile node.

In one or more embodiments, the localization handover unit instructs the mobile node to cease interaction with the first localization system after performing the logical handover.

In one or more embodiments, the first localization system is an outdoor localization system and the second localization system is an indoor localization system; or the first localization system is an indoor localization system and the second localization system is an outdoor localization system; or the first localization system is an indoor localization system and the second localization system is an indoor localization system.

In accordance with a second aspect of the present disclosure, a computer program is provided, comprising executable instructions which, when executed by a gateway device, cause said gateway device to perform a method of the kind set forth.

In accordance with a third aspect of the present disclosure, a gateway device is provided, comprising: a detection unit configured to detect that an external mobile node is within a predefined distance from the gateway device; a movement determination unit configured to determine a spatial movement of the mobile node; a localization handover unit configured to perform a logical handover of the mobile node from a first localization system to a second localization system in dependence on the spatial movement determined by the movement determination unit.

In one or more embodiments, the localization handover unit is configured to perform said logical handover if the spatial movement determined by the movement determination unit indicates that the mobile node physically approaches the gateway device.

### DESCRIPTION OF DRAWINGS

Embodiments will be described in more detail with reference to the appended drawings.
Fig. 1 shows an illustrative embodiment of a method of operating a gateway device.
Fig. 2 shows an illustrative embodiment of a gateway device.
Fig. 3 shows an illustrative embodiment of an application scenario.
Fig. 4 shows an illustrative embodiment of a communication flow.

### DESCRIPTION OF EMBODIMENTS

As mentioned above, localization systems are typically configured to aid a mobile node to determine its position within a predefined area. However, often there are different types of localization systems in active use, which typically cover different geographical areas, such as outdoor areas and indoor areas. In that case, it may be difficult to transition from one localization system to another. For instance, if a mobile node determines its position using satellite signals and subsequently enters a building, user input may be required to configure the mobile node for interaction with an indoor localization system. Furthermore, in case of autonomous vehicles, a correct interaction with such an indoor localization system is very important. Therefore, it may be desirable to facilitate that a mobile node transitions between different localization systems.

Examples of mobile nodes are devices used for navigational purposes, for example for use within a vehicle. Devices operating outdoor may derive their absolute positions using Global Navigation Satellite System (GNSS) communications. Whenever these devices are travelling from outdoor areas to indoor spaces, in which satellite signals cannot penetrate or cannot be used for positioning, they will lose the GNSS signals and therefore their spatial awareness. Therefore, other technologies should be used, specifically for realizing real-time localization in order to determine and track the location of objects or people in indoor spaces. For example, UWB communication technology may be used for this purpose. However, devices of this kind typically do not automatically transition from a satellite-based localization system to an UWB-based localization system. Ideally, end users will maintain their positioning information without realizing that the underlying technology used to retrieve it has changed. This goal is difficult to achieve if mobile nodes do not automatically transition between localization systems.

Now are discussed a method of operating a gateway device, as well as a corresponding gateway device, which facilitate that mobile nodes transition between localization systems.

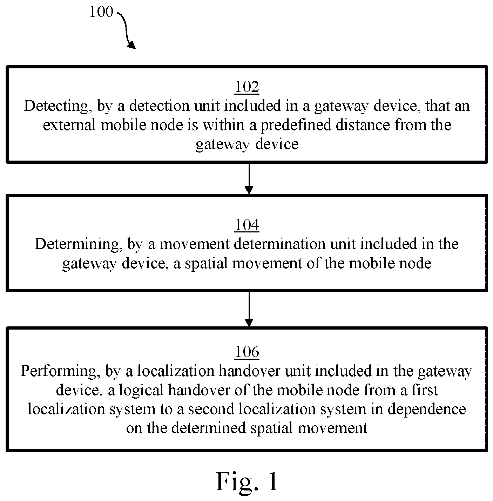

Fig. 1 shows an illustrative embodiment of a method 100 of operating a gateway device. The method 100 comprises the following steps. At 102, a detection unit included in the gateway device detects that an external mobile node is within a predefined distance from the gateway device. At 104, a movement determination unit included in the gateway device determines a spatial movement of the mobile node. Furthermore, at 106, a localization handover unit included in the gateway device performs a logical handover of the mobile node from a first localization system to a second localization system in dependence on the determined spatial movement. By performing these steps, it is facilitated that the mobile node transitions from the first localization system to the second localization system.

In one or more embodiments, the logical handover is performed if the determined spatial movement indicates that the mobile node physically approaches the gateway device. In this way, the logical handover may only be performed if the transition from the first localization system to the second localization system is intended. In other words, unintended transitions may be avoided more easily. In one or more embodiments, the detection unit further detects a direction of UWB signals transmitted by the mobile node, and the localization handover unit performs said logical handover in dependence on the determined spatial movement and said direction of UWB signals transmitted by the mobile node. In this way, a more precise determination of the spatial movement of the mobile node may be enabled. In a practical implementation, the gateway device forms part of the second localization system. In this way, the hardware resources of the second localization system may be reused, thereby avoiding an increase in hardware cost.

In one or more embodiments, the first localization system is a satellite-based localization system and the second localization system is a localization system based on UWB communication. In this way, the method may facilitate that the mobile node transitions from a satellite-based localization system to a localization system based on UWB communication. Satellite-based localization is particularly suitable for outdoor use, while UWB-based localization is particularly suitable for indoor use. In one or more embodiments, the detection unit detects whether the mobile node is within the predefined distance by causing one or more UWB nodes of the second localization system to perform an object detection operation, and the movement determination unit determines the spatial movement by causing the UWB nodes to perform ranging operations with the mobile node. In this way, existing hardware of a UWB-based localization system may be reused for the purpose of facilitating the transition of the mobile node. The skilled person will appreciate that performing the object detection operation may be implemented in different ways. For example, instead of actively transmitting signals to detect an object, the UWB nodes may also only listen to incoming signals transmitted by the object in order to detect it.

In one or more embodiments, performing the logical handover comprises transmitting first data from the localization handover unit to a localization unit comprised in the second localization system, wherein said first data at least includes a current position of the mobile node and a direction of movement. In this way, it is further facilitated that the mobile node transitions from the first localization system to the second localization system. In one or more embodiments, performing the logical handover comprises transmitting second data from the localization handover unit to the mobile node, wherein said second data at least includes a map of a predefined area covered by the second localization system. In this way, it is further facilitated that the mobile node transitions from the first localization system to the second localization system.

In one or more embodiments, the detection unit detects the mobile node by periodically broadcasting discovery beacons and receiving a response to at least one of said beacons, or by receiving one or more beacons transmitted by the mobile node. In this way, the detection of the mobile node is facilitated. In one or more embodiments, the detection unit further negotiates communication parameters with the mobile node, said parameters being usable by the movement determination unit and the localization handover unit for communication with the mobile node. In this way, a communication protocol between the gateway device and the mobile node may conveniently be set up during the detection phase of the presently disclosed method. In one or more embodiments, the localization handover unit instructs the mobile node to cease interaction with the first localization system after performing the logical handover. In this way, the transition from the first localization system to the second localization system may easily be concluded.

In one or more embodiments, the first localization system is an outdoor localization system and the second localization system is an indoor localization system, or the first localization system is an indoor localization system and the second localization system is an outdoor localization system, or the first localization system is an indoor localization system and the second localization system is an indoor localization system. Thus, the presently disclosed method may be used to transition the mobile node between different types of localization systems, either outdoor to indoor, indoor to outdoor, or indoor to indoor.

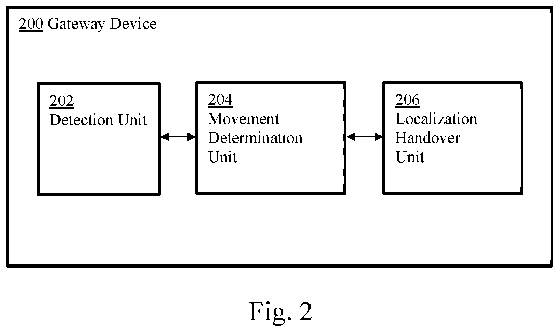

Fig. 2 shows an illustrative embodiment of a gateway device 200. The gateway device 200 comprises a detection unit 202, a movement determination unit 204 and a localization handover unit 206. The detection unit 202 is configured to detect that an external mobile node (not shown) is within a predefined distance from the gateway device. It is noted that the term "external" refers to the fact that the mobile node does not form part of the gateway device 100. Furthermore, the movement determination unit 204 is configured to determine a spatial movement of the mobile node. Furthermore, the localization handover unit 206 is configured to perform a logical handover of the mobile node from a first localization system (not shown) to a second localization system (not shown) in dependence on the spatial movement determined by the movement determination unit 204. It is noted that, although the detection unit 202, movement determination unit 204 and localization handover unit 206 have been shown as separate units, two or more of them may be combined into a single processing unit (i.e., into a single hardware and/or software component). As mentioned above with reference to the corresponding method, by performing the detection, the movement determination and the logical handover in dependence on the determined movement, it is facilitated that the mobile node transitions from the first localization system to the second localization system. Optionally, the detection unit may also be configured to detect the direction of UWB signals transmitted by the mobile node. In that case, the localization handover unit may be configured to perform the logical handover in dependence on the determined spatial movement and said direction.

The presently disclosed method and corresponding gateway device make it easier to ensure that devices travelling from outside to inside areas (and vice versa), will maintain their spatial awareness and seamlessly switch from, for example, GNSS to UWB technology as source of positioning. In a practical implementation, a UWB gateway device may be responsible for detecting approaching or exiting devices and for negotiating connection settings. For example, in case mobile nodes are integrated into vehicles, the UWB gateway device may communicate to these mobile nodes which UWB frequency to use, as well as the identifiers of fixed UWB nodes (i.e., anchor nodes) that form part of the second localization system. Furthermore, maps - or reference points to known maps - may be built, maintained and shared upon connections, so that the devices will always know their locations. Furthermore, the actual handover moment may be defined, for example when to break GNSS and/or UWB in order to switch to the other technology.

The presently disclosed method and corresponding gateway device may be used to facilitate the transition of mobile nodes between any indoor and outdoor localization systems, regardless of the technologies they adopt. In other words, GNSS-based and UWB-based localization systems are merely examples of such systems. Furthermore, even indoor-to-indoor transitions may be facilitated, in case multiple indoor localization systems based on different technologies are used. For example, the presently disclosed method and corresponding gateway device may facilitate the transition of a mobile node from an indoor, Bluetooth low energy (BLE)-based localization system to an indoor UWB-based localization system.

The presently disclosed method and corresponding gateway device may be used in a variety of different applications. In the following, an example will be described, in which the method is applied in an automotive use case. In the automotive industry, a lot of resources are being invested in autonomous cars. To be able to drive in all conditions, cars are equipped with many sensors and different technologies. For instance, GNSS receivers are nowadays present in almost every vehicle. Their primary goal is to listen to the satellite messages and use them to compute the position of the car and eventually navigate the driver (and the car) from point A to point B. In the case of autonomous driving, the car should always know its position to be able to make the right decisions. When point A and point B of the journey are in different scenarios - for example when B is inside a parking garage - then the GNSS navigation system may not be able to inform the car about the next move, because satellite signals cannot be used reliably indoors.

For autonomous vehicles, not losing spatial awareness (i.e., not losing their positioning ability), even for a short amount of time, is critical as there is no possibility to rely on a human's vision or intervention to decide which direction to take. In addition to GNSS receivers, modern cars often contain one or more UWB-based receivers, which may be used for secure car access applications. However, UWB-based localization systems are gaining popularity and it may be envisaged that indoor places will be equipped with many UWB nodes. If the presently disclosed method and gateway device are applied to transition the car's navigation system from the GNSS-based localization system to the UWB-based localization system, a loss of the positioning ability, and a resulting interruption of the navigation system when the car enters the indoor space, may be avoided. In other words, the car (or driver) may not see any disconnection, because a seamless handover may be performed from the GNSS-based localization system to the UWB-based localization system, and vice versa.

In a more detailed implementation, which represents a non-limiting example, the presently disclosed method may contain the following steps. First, a UWB gateway device may periodically broadcast discovery beacons (UWB, BLE or Wi-Fi beacon signals, for example) looking for approaching vehicles. If a connection is made during a connection phase, then this connection may be used to negotiate settings for subsequent UWB communications, e.g., which channel and coding schemes to use in following communications. Subsequently, a monitoring phase may start. During this phase, it may be determined whether a vehicle (or a person) is effectively approaching the indoor space. For this purpose, the gateway device may enter into a ranging mode in which UWB-based ranging operations may be performed. For instance, if (ranging) distances are increasing, the connection may be broken, and the device is assumed to be passing by. In that case, the method may return to the first step. Otherwise, if the distances (and/or angles) decreasing, the next phase (i.e., the handover phase) of the method may start.

During the handover phase, handover information may be exchanged between the approaching mobile node (i.e., the navigation system of the car) and the indoor 'destination' place and its infrastructure. For example, UWB, BLE or other wireless technologies may be used to exchange relevant information, such as the mobile node's current absolute position and speed, the set of UWB anchors to range with, and indoor map information. Then, upon successful reception of the handover information, the mobile node may start to retrieve its position using UWB, while the satellite is still visible. During a translation phase UWB positions may be loaded into the map that is used by the GNSS system. This task may be performed an end-user application, for example an on-board car computer. If the translation is successful, then the GNSS module may be deactivated (i.e., GNSS signals may be ignored), such that the navigation will rely only on UWB ranging operations. In other words, the mobile node then fully operates in a UWB ranging mode. It is noted that the reverse mechanism may also be envisioned. In that case, when the mobile node approaches the UWB gateway device, the UWB communication may be maintained until valid GNSS satellite data are available to the mobile node.

It is noted that UWB technology - also referred to as impulse-radio ultra-wideband (IR-UWB) - is an RF communication technology that uses pulses having a short duration for data communication. An important feature of IR-UWB technology is that it can be used for secure and accurate distance measurements between two or more devices. Typical distance measurement methods are the so-called single-sided two-way ranging (SS-TWR) method and the double-sided two-way ranging (DS-TWR) method. In a ranging mode of operation, frames will typically be exchanged between two devices via at least one antenna on each device, and at least a SS-TWR operation will be carried out (which may also be referred to as a ping-pong operation). In particular, channel impulse responses (CIRs) are estimated on both devices, timestamps will be generated based on the CIRs on both devices, and those timestamps are exchanged. Then, a time of flight (ToF) is calculated based on the timestamps and a range (i.e., a distance) is calculated based on the ToF. Alternatively, a DS-TWR operation may be carried out (which may also be referred to as a ping-pong-ping operation).

It is noted that an angle-of-arrival (AoA) mode of operation is similar to a ranging mode, but it involves at least two antennas on one device. In particular, in an AoA mode of operation, two phase values associated with at least two CIRs are calculated on one device. Then, a phase difference of arrival (PDoA) is calculated based on the two phase values, and an AoA is calculated based on the PDoA. An AoA mode of operation may facilitate a more accurate determination of the position of an object, and may thus complement ranging operations performed in the ranging mode. As used in this description, the ranging mode of operation may therefore be extended to include the AoA mode of operation, in the sense that when a device operates in the ranging mode, it may optionally perform additional operations which are typically performed in the AoA mode of operation. Furthermore, as used herein, the ranging mode may include performing operations based on a so-called Time Difference of Arrival (TDoA) technique, instead of a ToF technique. The TDoA technique is a method which is based on the different arrival times. It is a one-way communication in which either only the infrastructure is transmitting and the mobile nodes only receiving or vice versa. The TDoA technique is particularly suitable for real-time localization operations. Generally speaking, the term "ranging mode" covers all types localization operations based on UWB message exchanges with an external UWB communication device. It is noted that AoA calculations may be used in combination with both ToF calculations and TDoA calculations. In practice, the TDoA may be the most suitable because it guarantees the highest scalability, in particular for the first detection phase. After the detection phase, the system may be switched to TWR as both the vehicle and the gateway intend to communicate data.

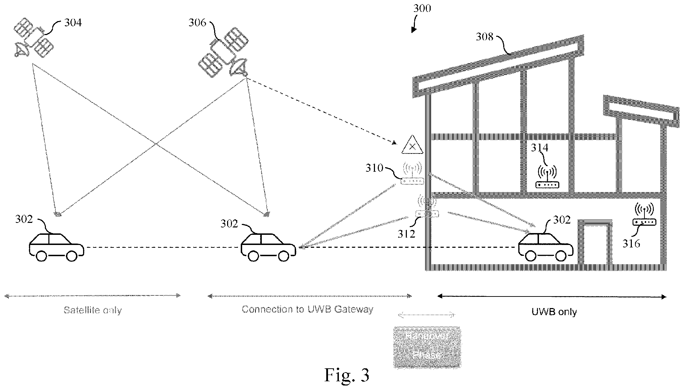

**Fig. 3** shows an illustrative embodiment of an application scenario 300. In particular, in this scenario 300 a car 302 is driving outside, while it only relies on communication with satellites 304, 306 for its navigation. More specifically, the car is approaching a building 308 (e.g., an indoor parking) and it is using a navigation system based on GNSS communication. Then, the UWB gateway devices 310, 312 sense the car 302 via their discovery mechanism and start the monitoring phase, which is intended to properly classify an incoming device (i.e., to classify it as approaching the building in order to enter it, or as passing by). Once the vehicle is classified as approaching, the handover phase may start. Then, the gateway devices 310, 312 and the car 302 will exchange all the information needed to break the GNSS-based navigation and switch to UWB-based navigation. For the UWB-based navigation, the car 302 determines its position by performing ranging operations with UWB nodes 314, 316. It is noted that, although multiple gateway devices 310, 312 are shown, it is also possible to use only a single UWB gateway device.

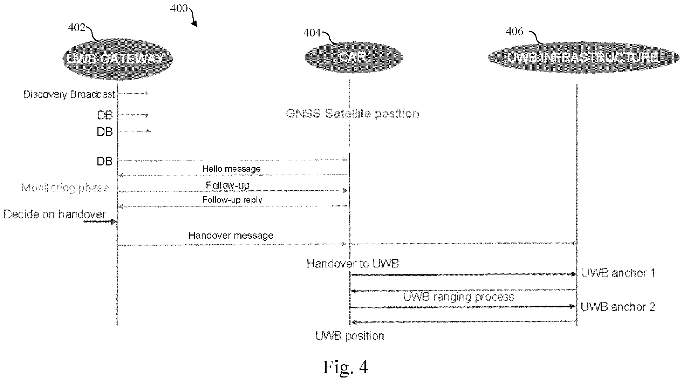

**Fig. 4** shows an illustrative embodiment of a communication flow 400. In this implementation, which represents a non-limiting example, the UWB gateway 402 is responsible for finding approaching vehicles by broadcasting discovery beacons (DBs). These are picked up by UWB-equipped devices and from that moment, the UWB gateway 402 will start monitoring the behavior of the car 404, i.e., determining if it is an approaching vehicle or it is just passing or driving by. To take this decision, several metrics may be used (e.g., UWB received signal strength indicators). In another implementation, UWB-based ranging may be performed between the car 404 and the UWB gateway 402 during the monitoring phase. In that case, the resulting distance estimates, and optionally direction estimates, could be used by the UWB gateway 402 to classify the device as either approaching or passing by. If it is determined that the car 404 indeed enters the indoor space, then actual handover will take place. An important task of the UWB gateway 402 is then to provide all the information to the car 402, e.g., which UWB anchors of the UWB infrastructure 406 to use, their fixed positions and other relevant information. Another important task is to translate the position information from absolute position information to relative position information, and vice versa. The UWB infrastructure 406 that is deployed in the indoor space will also be triggered by the UWB gateway 402 (which may also form part of this infrastructure 406) to make sure it will expect the car 404. At this moment, the car 404 will fully switch to UWB-based navigation and ignore any still visible GNSS signals. This process may be executed entirely in the background, so that users do not need to be aware of the technology used to guide them indoor.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: method of operating a gateway device
- 102: detecting, by a detection unit included in a gateway device, that an external mobile node is within a predefined distance from the gateway device
- 104: determining, by a movement determination unit included in the gateway device, a spatial movement of the mobile node
- 106: performing, by a localization handover unit included in the gateway device, a logical handover of the mobile node from a first localization system to a second localization system in dependence on the determined spatial movement
- 200: gateway device
- 202: detection unit
- 204: movement determination unit
- 206: localization handover unit
- 300: application scenario
- 302: car
- 304: satellite
- 306: satellite
- 308: building
- 310: gateway device
- 312: gateway device
- 314: UWB node
- 316: UWB node
- 400: communication flow
- 402: UWB gateway
- 404: car
- 406: UWB infrastructure

## Claims

1. A method of operating a gateway device, comprising:
detecting, by a detection unit included in the gateway device, that an external mobile node is within a predefined distance from the gateway device;
determining, by a movement determination unit included in the gateway device, a spatial movement of the mobile node;
performing, by a localization handover unit included in the gateway device, a logical handover of the mobile node from a first localization system to a second localization system in dependence on the determined spatial movement.

2. The method of claim 1, wherein the handover is performed if the determined spatial movement indicates that the mobile node physically approaches the gateway device.

3. The method of claim 1 or 2, wherein the detection unit further detects a direction of UWB signals transmitted by the mobile node, and wherein the localization handover unit performs said logical handover in dependence on the determined spatial movement and said direction of UWB signals transmitted by the mobile node.

4. The method of any preceding claim, wherein the gateway device forms part of the second localization system.

5. The method of any preceding claim, wherein the first localization system is a satellite-based localization system and the second localization system is a localization system based on ultra-wideband, UWB, communication.

6. The method of claim 5, wherein the detection unit detects whether the mobile node is within said predefined distance by causing one or more UWB nodes of the second localization system to perform an object detection operation, and wherein the movement determination unit determines the spatial movement by causing the UWB nodes to perform ranging operations with the mobile node.

7. The method of any preceding claim, wherein performing the logical handover comprises transmitting first data from the localization handover unit to a localization unit comprised in the second localization system, wherein said first data at least includes a current position of the mobile node and a direction of movement.

8. The method of any preceding claim, wherein performing the logical handover comprises transmitting second data from the localization handover unit to the mobile node, wherein said second data at least includes a map of a predefined area covered by the second localization system.

9. The method of any preceding claim, wherein the detection unit detects the mobile node by periodically broadcasting discovery beacons and receiving a response to at least one of said beacons, or by receiving one or more beacons transmitted by the mobile node.

10. The method of any preceding claim, wherein the detection unit further negotiates communication parameters with the mobile node, said parameters being usable by the movement determination unit and the localization handover unit for communication with the mobile node.

11. The method of any preceding claim, wherein the localization handover unit instructs the mobile node to cease interaction with the first localization system after performing the logical handover.

12. The method of any preceding claim, wherein:
the first localization system is an outdoor localization system and the second localization system is an indoor localization system; or
the first localization system is an indoor localization system and the second localization system is an outdoor localization system; or
the first localization system is an indoor localization system and the second localization system is an indoor localization system.

13. A computer program comprising executable instructions which, when executed by a gateway device, cause said gateway device to perform the method of any preceding claim.

14. A gateway device, comprising:
a detection unit configured to detect that an external mobile node is within a predefined distance from the gateway device;
a movement determination unit configured to determine a spatial movement of the mobile node;
a localization handover unit configured to perform a logical handover of the mobile node from a first localization system to a second localization system in dependence on the spatial movement determined by the movement determination unit.

15. The gateway device of claim 14, wherein the localization handover unit is configured to perform said logical handover if the spatial movement determined by the movement determination unit indicates that the mobile node physically approaches the gateway device.

## Amended claims

### Amended claims in accordance with Rule 137(2) EPC.

1. A method (100) of operating a gateway device, comprising:
detecting (102), by a detection unit included in the gateway device, that an external mobile node is within a predefined distance from the gateway device;
determining (104), by a movement determination unit included in the gateway device, a spatial movement of the mobile node;
performing (106), by a localization handover unit included in the gateway device, a logical handover of the mobile node from a first localization system to a second localization system in dependence on the determined spatial movement.

2. The method (100) of claim 1, wherein the handover is performed if the determined spatial movement indicates that the mobile node physically approaches the gateway device.

3. The method (100) of claim 1 or 2, wherein the detection unit further detects a direction of UWB signals transmitted by the mobile node, and wherein the localization handover unit performs said logical handover in dependence on the determined spatial movement and said direction of UWB signals transmitted by the mobile node.

4. The method (100) of any preceding claim, wherein the gateway device forms part of the second localization system.

5. The method (100) of any preceding claim, wherein the first localization system is a satellite-based localization system and the second localization system is a localization system based on ultra-wideband, UWB, communication.

6. The method (100) of claim 5, wherein the detection unit detects (102) whether the mobile node is within said predefined distance by causing one or more UWB nodes of the second localization system to perform an object detection operation, and wherein the movement determination unit determines (104) the spatial movement by causing the UWB nodes to perform ranging operations with the mobile node.

7. The method (100) of any preceding claim, wherein performing (106) the logical handover comprises transmitting first data from the localization handover unit to a localization unit comprised in the second localization system, wherein said first data at least includes a current position of the mobile node and a direction of movement.

8. The method (100) of any preceding claim, wherein performing (106) the logical handover comprises transmitting second data from the localization handover unit to the mobile node, wherein said second data at least includes a map of a predefined area covered by the second localization system.

9. The method (100) of any preceding claim, wherein the detection unit detects (102) the mobile node by periodically broadcasting discovery beacons and receiving a response to at least one of said beacons, or by receiving one or more beacons transmitted by the mobile node.

10. The method (100) of any preceding claim, wherein the detection unit further negotiates communication parameters with the mobile node, said parameters being usable by the movement determination unit and the localization handover unit for communication with the mobile node.

11. The method (100) of any preceding claim, wherein the localization handover unit instructs the mobile node to cease interaction with the first localization system after performing the logical handover.

12. The method (100) of claim 1, wherein:
the first localization system is an outdoor localization system and the second localization system is an indoor localization system; or
the first localization system is an indoor localization system and the second localization system is an outdoor localization system; or
the first localization system is an indoor localization system and the second localization system is an indoor localization system.

13. A computer program comprising executable instructions which, when executed by a gateway device, cause said gateway device to perform the method (100) of any preceding claim.

14. A gateway device (200), comprising:
a detection unit (202) configured to detect that an external mobile node is within a predefined distance from the gateway device;
a movement determination unit (204) configured to determine a spatial movement of the mobile node;
a localization handover unit (206) configured to perform a logical handover of the mobile node from a first localization system to a second localization system in dependence on the spatial movement determined by the movement determination unit (204).

15. The gateway device (200) of claim 14, wherein the localization handover unit (206) is configured to perform said logical handover if the spatial movement determined by the movement determination unit (204) indicates that the mobile node physically approaches the gateway device (200).
